# FASCICULE DE BREVET EUROPEEN

(11) **EP 2 443 713 B1**
(45) Date de publication et mention de la délivrance du brevet: **15.05.2013**
(21) Numéro de dépôt: 10734513.4
(22) Date de dépôt: 18.06.2010
(51) Int. Cl.: H02G 3/08, H02G 3/22

(54) **DISPOSITIF DESTINÉ À ÊTRE RAPPORTÉ SUR UNE PAROI POUR FORMER UNE CLOISON ÉTANCHE ET ENVELOPPE ÉQUIPÉE D'UN TEL DISPOSITIF ET DESTINÉE À LOGER AU MOINS UN APPAREIL ÉLECTRIQUE**
VORRICHTUNG ZUR HERSTELLUNG EINER AN EINER WAND ZU MONTIERENDEN GEDICHTETE ABTRENNUNG UND GEHÄUSE ZUR AUFNAHME VON MINDESTENS EINEM ELEKTROGERÄT MIT EINER DERARTIGEN VORRICHTUNG
DEVICE FOR FORMING A SEALED PARTITION, TO BE MOUNTED ON A WALL, AND ENCLOSURE FOR RECEIVING AT LEAST ONE ELECTRIC APPARATUS, INCLUDING SUCH A DEVICE

(30) Priorité: 19.06.2009 FR 0954155
(43) Date de publication de la demande: 25.04.2012
(73) Titulaire: Serge Ferrari SAS, 38110 Saint Jean de Soudain (FR)
(72) Inventeur: SAIZ, Carlos, F-73190 Challes Les Eaux (FR); BARIL, Sébastien, F-73000 Bassens (FR); PULFER, Philippe, F-38640 Claix (FR); CHAMPEAUX, Nathalie, F-74000 Annecy (FR); GINEVRA, Bernard, F-38400 Saint Martin D'heres (FR)
(74) Mandataire: Palix, Stéphane
(86) Numéro de dépôt international: PCT/FR2010/051232
(87) Numéro de publication internationale: WO 2010/146320

(56) Documents cités:
- EP-A- 1 643 604
- WO-A-98/35406
- CH-A5- 697 077

## Description

### DOMAINE TECHNIQUE

La présente invention se rapporte au domaine de la réalisation de cloisons étanches entre des éléments longilignes et une paroi. De tels éléments longilignes peuvent notamment se présenter sous la forme de tubes, de canalisations pour permettre la circulation d'un fluide, de gaines ou de câbles électriques.

L'invention vise plus particulièrement un dispositif destiné à être rapporté au niveau d'une ouverture ménagée dans une paroi de façon à réaliser une cloison étanche.

### ART ANTERIEUR

De façon générale, on connaît des dispositifs formant une cloison étanche réalisée à partir d'une tôle ou d'une plaque de plastique rigide qu'un opérateur doit percer pour pouvoir y faire passer des éléments longilignes tels que des câbles ou gaines électriques. Par ailleurs, une fois cette plaque ou tôle percée, il doit positionner un organe souple d'étanchéité généralement désigné par le terme de « presse-étoupe » pour garantir une étanchéité au niveau de cette cloison. Le document WO-98/35406 décrit un tel "presse-étoupe".

Cependant, ce type de dispositif présente de nombreux inconvénients, et notamment il n'est pas flexible puisqu'une fois le trou réalisé dans la cloison, il n'est pas possible pour l'opérateur de le changer de place. Cela peut donc engendrer des difficultés supplémentaires pour connecter, à l'intérieur d'un boîtier électrique, le câble dont le cheminement n'est pas optimum au travers de cette cloison.

Par ailleurs, pour réaliser l'étanchéité, il est nécessaire de positionner des presse-étoupes qu'il faudra placer dans les trous mais surtout transporter sur site et ne pas égarer. Ainsi, la fonction d'étanchéité est complexe à réaliser et engendre des contraintes logistiques et de stockage supplémentaires.

De même, pour les tubes ou canalisations, les dispositifs formant une cloison étanche ne permettent pas de modifier le positionnement des éléments longilignes. L'étanchéité est dans ce cas réalisée par un joint de mastic tel que du silicone ou analogue formé au moyen d'un outillage supplémentaire tel un pistolet contenant une cartouche de mastic à l'état visqueux.

Ainsi, un premier objectif de l'invention est de permettre, d'une part, une grande souplesse d'utilisation avec un repositionnement des éléments longilignes si nécessaire, et d'autre part, de garantir l'étanchéité au niveau de la jonction des éléments longilignes avec la cloison, sans nécessiter un accessoire ou outil supplémentaire à la cloison.

Par ailleurs, dans les domaines de l'isolation thermique, phonique et de la protection aux chocs, il est connu d'utiliser des dispositifs composites comportant un nappe textile noyée dans du silicone. Ce type de dispositif n'est cependant pas destiné à être traversé par des objets et ne permettrait pas de réaliser une étanchéité entre deux volumes s'il était traversé par un objet.

En effet, ce type de dispositif ne permet pas de réaliser une rétractation efficace du silicone de façon à épouser la périphérie d'un objet tel qu'un élément longiligne.

De plus, le passage de tels éléments longilignes au travers de ces dispositifs endommageraient la nappe textile emprisonnée à l'intérieur du silicone. Les fils de la nappe textile seraient ainsi sectionnés localement. En effet, lorsque la nappe textile est noyée dans du silicone, celle-ci ne peut pas se déformer librement pour laisser passer les éléments longilignes. Par conséquent le repositionnement des éléments longilignes est impossible avec ce type de dispositif.

Ainsi, un second objectif de l'invention est de permettre une liberté de mouvement des fils de la nappe textile de façon à permettre leur écartement et ne pas détériorer les caractéristiques mécaniques de la nappe textile lors de la traversée d'un élément longiligne.

### EXPOSE DE L'INVENTION

L'invention concerne donc un dispositif destiné à être rapporté sur une paroi pour former une cloison traversée par des éléments longilignes en formant, au moins au niveau du passage des éléments longilignes, une liaison étanche entre les deux volumes délimités par la paroi.

Selon l'invention, ce dispositif ***se** caractérise* en ce qu'il comporte un complexe textile destiné à être traversé par les éléments longilignes et comportant au moins une nappe textile, cette nappe étant recouverte sur au moins une de ses faces par une couche d'enduction apte à se rétracter pour, d'une part, épouser de façon substantielle la périphérie d'un élément longiligne agencé au travers de la cloison, et d'autre part, réaliser l'étanchéité de la cloison une fois l'élément longiligne retiré.

Autrement dit, l'étanchéité est réalisée directement par la cloison elle-même au moyen d'une couche d'enduction réalisée dans un matériau fortement résilient pour se refermer si une erreur du positionnement d'un élément longiligne est réalisée par l'opérateur. De cette manière, il est possible de traverser la cloison simplement en exerçant une force de progression avec l'élément longiligne sur le complexe textile. Une fois la cloison traversée, le matériau de la couche d'enduction peut former un bourrelet de manière à garantir l'étanchéité au niveau de cette liaison.

Selon une forme particulière de réalisation, la nappe textile peut présenter une armure incluant des flottés, telles que les armures satin ou sergé Un tel agencement permet ainsi de laisser flottants une partie des fils de la nappe et de faciliter la traversée du complexe textile sans endommager de manière irréversible les caractéristiques de résistance mécanique d'un tel complexe.

Par ailleurs, les éléments longilignes traversant cette cloison peuvent être de différentes sections et par conséquent, il peut être avantageux d'utiliser une cloison présentant des zones dont la capacité de rétractation de la couche d'enduction est fonction de la section des éléments longilignes devant la traverser.

Pour ce faire, le dispositif peut comporter une superposition d'au moins deux nappes textiles. Plusieurs modes de réalisation peuvent alors permettre d'arriver à cette superposition de nappes textiles.

Ainsi, selon un premier mode de réalisation, cette superposition de nappes textiles peut être réalisée en superposant des nappes préalablement enduites. Elles peuvent notamment être de même nature et réparties de manière localisée sur une première nappe servant de base aux autres nappes rapportées. Dans ce cas, les au moins deux nappes sont enduites puis superposées.

Dans ce cas, les nappes recouvertes de leur couche d'enduction peuvent être collées entre elles. De cette manière, on réalise un complexe textile présentant des zones de densité différenciée à la fois en nappe textile et en couche d'enduction.

Selon un second mode de réalisation, les au moins deux nappes textiles peuvent être superposées puis enduites. Dans ce cas, on augmente localement la densité de textile et donc également son épaisseur préalablement à son recouvrement par la couche d'enduction sur au moins une de ses faces.

De cette manière, le complexe textile peut comporter localement une ténacité au déchirement élevée pour, par exemple, permettre le passage d'un élément longiligne de grande section et garantir l'étanchéité au niveau de cette liaison.

En pratique, la nappe textile peut comporter des fils de haute tenacité tels que des fils métalliques. Ces fils métalliques permettent de garantir un allongement nul ou faible dans certaines zones du complexe textile de façon à permettre une perforation dans les zones où les éléments longilignes doivent passer au travers de la cloison.

Avantageusement, la nappe textile peut comporter des fils de verre ou analogue. En effet, de tels fils tissés ou non tissés sont aptes à se casser aisément lors de la perforation du complexe textile par un élément longiligne. De tels fils facilitent la tâche des opérateurs qui n'ont pas besoin de pré-percer le complexe textile avec un outil annexe. A titre d'exemple, un textile présentant des fils de quelques dizaines de tex peuvent être utilisés et la nappe textile peut comporter environ 10 fils au centimètre.

Selon un mode de réalisation particulier, la couche d'enduction peut être formée dans un matériau à base de mousse de silicone. Un tel matériau peut être traité de manière hydrophobe pour améliorer l'étanchéité à l'eau de la liaison entre l'élément longiligne et la cloison. Il peut présenter des cellules ouvertes ou fermées selon le type d'application, mais possède dans tous les cas une grande résilience pour revenir rapidement à sa position d'origine lorsqu'il n'est plus sollicité.

En pratique, le complexe textile peut comporter une grille, c'est-à-dire une structure textile très ajourée, solidarisée avec la nappe textile par une bande intermédiaire thermosoudable.

Dans ce cas, certaines zones de la cloison dans lesquelles l'étanchéité n'est pas nécessaire peuvent permettre de réaliser une aération entre les deux volumes séparés par la paroi. De plus, une telle cloison peut être confectionnée en usine et être découpée dans une direction perpendiculaire à la bande intermédiaire de collage pour former une pluralité de cloisons à partir de laizes de grande dimension assemblées entre elles par thermosoudage.

Selon un exemple particulier, cette bande intermédiaire peut notamment se présenter sous la forme d'un ruban de silicone non réticulé déroulé sur le complexe textile ou la grille.

Avantageusement, le dispositif peut être rapporté par un collage sur la paroi. Le dispositif comporte alors une bande autocollante permettant de solidariser le complexe textile avec la paroi sur laquelle il est destiné à être rapporté. Ainsi, l'opération d'assemblage peut être réalisée très rapidement en effectuant une simple pression sur le dispositif positionné au contact de la paroi. Ce collage peut également utiliser un procédé de chauffage de manière à faire réticuler une colle thermosensible.

Selon un autre mode de réalisation, le complexe textile peut également être solidarisé par coincement au moyen d'éléments de serrage tels que des boulons ou des rivets. Ce coincement du complexe textile est alors réalisé entre, d'une part, la paroi, et d'autre part, une embase ajourée agencée à la périphérie du complexe.

Dans ce cas, il est alors envisagé de préalablement réaliser des évidements dans le complexe de façon à permettre le passage des éléments de serrage. De tels évidements peuvent notamment être réalisés par perçage à l'aide d'un outil coupant ou d'un emporte-pièce ou tout autre moyen de découpe sans outil tel que la découpe par jet d'eau ou par laser.

Par ailleurs, le dispositif peut comporter une embase ajourée localement et sensiblement rigide sur laquelle la nappe textile est rapportée.

Des ouvertures ménagées dans l'embase permettent le passage des éléments longilignes au travers de la cloison, tandis les portions pleines de l'embase permettent de conférer une tenue mécanique à l'arrachement de la nappe textile en limitant son amplitude de déformation. En effet, la nappe textile peut être solidarisée par collage avec l'embase.

Une telle embase peut notamment être réalisée dans un matériau choisi dans le groupe comprenant les métaux ferreux, les métaux non ferreux, le bois naturel, le bois compacté, les matériaux composites à bases de fibres ou comportant une structure alvéolaire de type "nid d'abeille".

Par ailleurs, l'invention concerne également une enveloppe formant une enceinte destinée à loger au moins un appareil électrique e, de type armoire, coffret, voire même boîtier, comportant une paroi formée, au moins en partie, par un dispositif tel que précédemment décrit. En effet, un tel dispositif peut faire partie intégrante d'un système de protection d'un ou plusieurs appareils électriques et ainsi simplifier le passage des câbles pour les raccordements

### DESCRIPTION SOMMAIRE DES FIGURES

La manière de réaliser l'invention ainsi que les avantages qui en découlent, ressortiront bien de la description du mode de réalisation qui suit, donné à titre indicatif mais non limitatif, à l'appui des figures dans lesquelles :
- la figure 1 est une vue en perspective du dispositif conforme à l'invention ;
- les figures 2 et 3 représentent deux variantes en coupe d'un tel dispositif ;
- la figure 4 est une vue en perspective de la variante de la figure 3 ;
- la figure 5 est une vue en perspective d'un dispositif conforme à l'invention ;
- la figure 6 est une vue en perspective d'un dispositif agencé sur une paroi de coffret électrique conformément à l'invention ;
- la figure 7 représente en vue de face un dispositif équipé d'une embase.

### DESCRIPTION DETAILLEE DE L'INVENTION

Comme déjà évoqué, l'invention concerne un dispositif destiné à être rapporté sur une paroi pour former une cloison étanche traversée par des éléments longilignes.

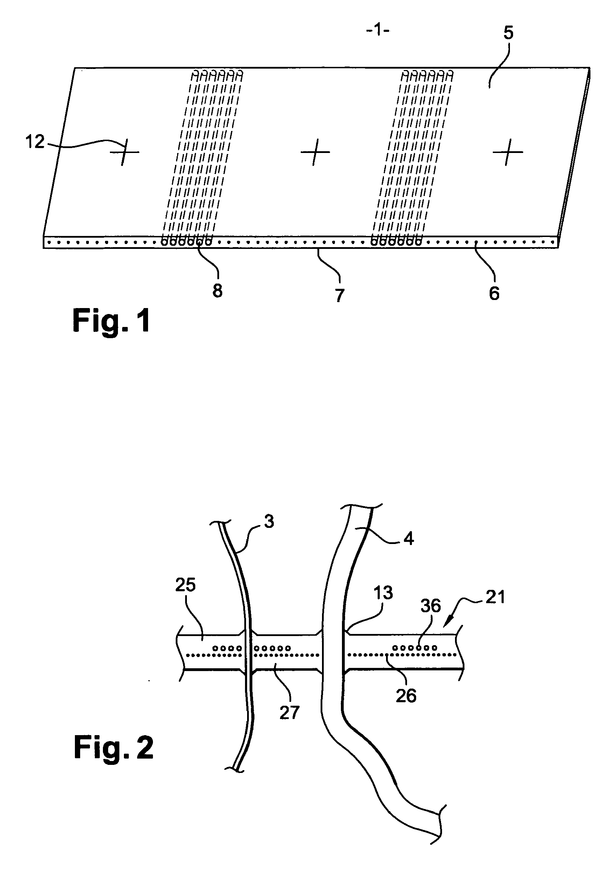

Tel que représenté à la figure 1, un dispositif **1** comporte un complexe textile **5** qui est destiné à être traversé par les éléments longilignes et à générer une liaison étanche au moins dans la zone de passage des éléments longilignes. Des marques **12** peuvent être représentées à la surface du complexe textile **5** pour permettre à l'opérateur de savoir dans quelles zones il doit faire passer les éléments longilignes. Par ailleurs, la nappe textile **6** peut comporter des fils métalliques **8** permettant de générer des zones inextensibles facilitant la perforation des zones munies des marquages **12**.

En outre, un tel complexe textile **5** comporte une nappe textile **6** recouverte par une couche d'enduction **7** sur au moins une de ses faces.

Selon une première variante, et tel que représenté à la figure 2, le dispositif **21** comporte un complexe textile **25** comportant deux nappes textiles **26, 36** au contact l'une de l'autre et recouvertes par une même couche d'enduction **27**. Une telle couche d'enduction est apte à se rétracter au contact des éléments longilignes **3,4** pour former un bourrelet **13** garantissant l'étanchéité à la périphérie de l'élément longiligne. Par ailleurs, lorsqu'on retire les éléments longilignes **3,4,** la couche d'enduction **27** est apte à se refermer de manière à générer une cloison étanche.

Tel que représentée, la nappe textile **26** du complexe textile **25** s'étend sur toute la surface de la cloison. Cependant, des bandes de nappe textile **36** peuvent être disposées de manière localisée au-dessus de cette première nappe textile **26**. De cette manière, on réalise des zones dont la densité de textile est variable à la surface du complexe **25**. Un tel agencement peut notamment être utile de manière à permettre le passage et/ou le maintien des éléments longilignes **3,4** de section différente.

Tel que représentée, une densité importante de nappe textile peut être avantageuse pour permettre le passage d'éléments longilignes **3** de petite section, tandis que des zones de faible densité de nappe textile peuvent permettre le passage d'éléments longilignes de section importante **4.**

De plus, la quantité de matière de la couche d'enduction **27** déplacée par un élément longiligne **3, 4** est fonction de l'aire de la section transversale de l'élément longiligne **3, 4** et de l'épaisseur de la couche d'enduction **27.** Plus l'aire de la section des éléments et plus l'épaisseur de la couche d'enduction sont importantes, plus la quantité de matière déplacée de la couche d'enduction **27** est grande.

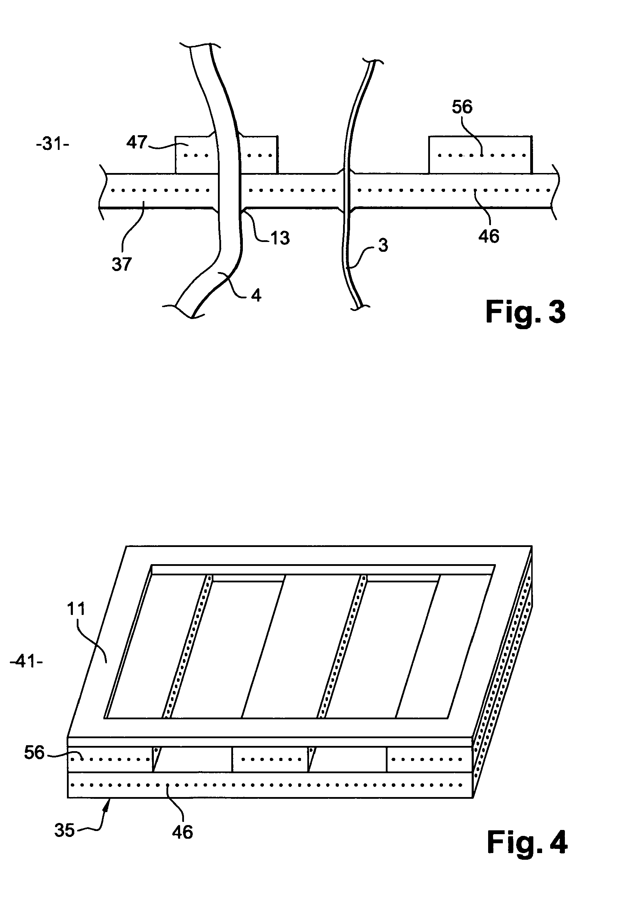

Par ailleurs, et tel que représenté à la figure 3, le dispositif **31** comporte un complexe textile **35** réalisé en superposant des nappes textiles **46, 56** préalablement enduites d'une couche d'enduction **37, 47.** Les nappes **46, 56** peuvent alors être solidarisées entre elles par thermo-soudage.

Selon une autre variante un intermédiaire de collage **32** peut être utilisé pour solidariser entre elles les deux nappes de textile enduit.

Par ailleurs, les zones de plus forte épaisseur de couches d'enduction peuvent permettre de réaliser le maintien en position d'éléments longilignes **4** de forte section, tandis que les zones plus fines du complexe textile permettent de maintenir en positon des éléments longilignes **3** de petite section.

Tel que représenté à la figure 4, le dispositif **41** comporte un complexe textile **35** tel que décrit précédemment. Ainsi, il comporte des bandes enduites de nappe textile **56** rapportées au contact d'une première nappe textile enduite **46**. Le complexe textile **35** comporte également une bande autocollante **11** permettant de solidariser le dispositif **41** avec une paroi.

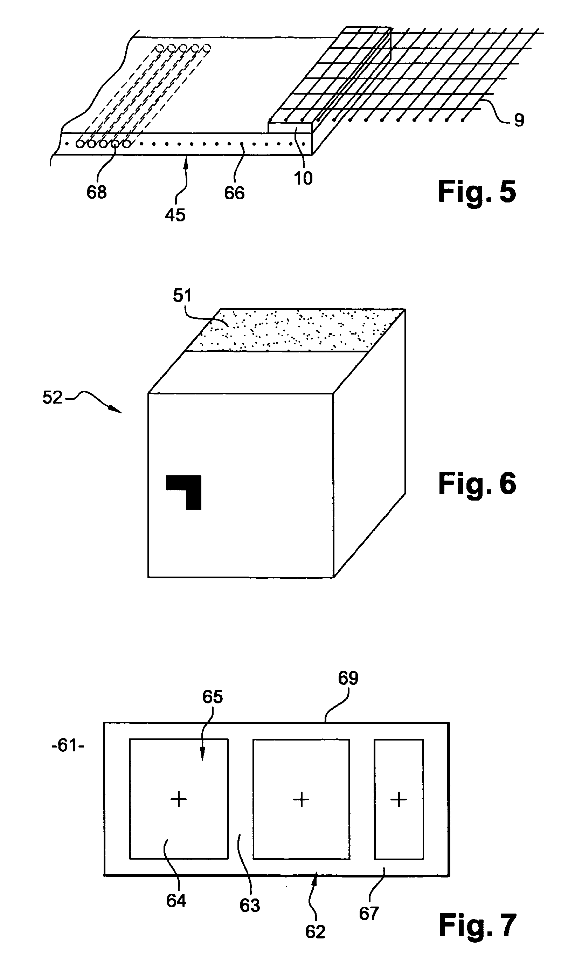

Tel que représenté à la figure 5, le complexe textile **45** peut comporter une grille **9** solidarisée avec la nappe textile **66** au moyen d'une bande intermédiaire **10** permettant de thermosouder les deux éléments entre eux. Une telle grille **9** permet notamment de réaliser une ventilation entre les deux volumes séparés par la paroi **2** dans une zone ne nécessitant pas une étanchéité à l'eau ou à l'air.

Par ailleurs, la nappe textile **66** peut comporter des fils de verre **68** permettant de générer des zones inextensibles facilitant la perforation de la nappe par les éléments longilignes.

Selon un exemple particulier d'application et tel que représenté à la figure 6, le dispositif **51** peut être agencé à la place d'un paroi, ou en combinaison avec un élément formant une partie de paroi, d'un coffret électrique basse tension **52,** généralement positionnée sur une face supérieure ou inférieure, de manière à faciliter le passage des câbles électriques à l'intérieur du coffret **52** pour leur connexion ultérieure. L'utilisation d'un dispositif **51** selon l'invention permet de remplacer les découpes et la mise en place de plaques passe-câbles existantes, tout en garantissant l'étanchéité autour des conducteurs électriques insérés, et en prévenant l'intrusion d'animaux de type rongeurs ou de la poussière dans l'enceinte du coffret **52**. Bien que non représenté, cette option peut être adaptée pour une armoire ou cellule moyenne tension ou un boîtier d'appareil électrique : toute enveloppe électrique tire parti des avantages précédemment mentionnés.

Tel que représenté à la figure 7, le dispositif **61** peut comporter une embase ajourée **62** sur laquelle le complexe textile **65** est rapportée. L'embase **62** comporte ainsi des ouvertures **64** permettant de laisser passer les éléments longilignes au travers de la paroi. Elle comporte également des portions de liaison **63** rejoignant deux bords opposés **67, 69** de l'embase **62.**

L'embase **62** permet de rigidifier localement la nappe textile **76** en limitant son amplitude de déformation. Pour certaines applications telles que le passage de canalisations, une telle embase **62** pourra notamment être réalisée en acier. Cependant, pour réaliser le passage de câbles électriques au travers d'une telle cloison, l'embase **62** pourra être réalisée dans un matériau non conducteur.

Une telle embase **62** peut également présenter une pluralité de perçage de façon à réaliser la solidarisation et le coincement du complexe **65** avec la paroi. Un tel coincement est généralement réalisé au moyen d'éléments de serrage tels que des boulons ou des rivets.

Il ressort de ce qui précède qu'un dispositif conforme à l'invention présentent de nombreux avantages, et notamment :
- il permet une grande souplesse pour faire passer des éléments longilignes au travers d'une paroi, par exemple des câbles à l'intérieur d'une enveloppe électrique ;
- il permet de changer la position de l'élément longiligne si celle-ci n'est pas optimale pour réaliser la connexion de l'élément avec un autre élément ou un organe annexe ;
- il permet de supprimer les éléments supplémentaires tels que des presse-étoupes, passe-câbles, ou autre, pour garantir une étanchéité ;
- il permet de réaliser une étanchéité parfaite à la poussière, à l'eau, aux animaux ou aux parasites ;
- il est réalisé dans des matériaux non conducteurs et ne génère donc pas de courant de Foucault parasite ;
- il peut être rapporté sur une paroi existante, ou la remplacer, et ne nécessite donc pas une conception spécifique compatible avec uniquement un nouveau produit ;
- il permet de générer une absorption thermique et phonique grâce au matériau de la couche d'enduction ;
- il permet une utilisation à des températures élevées et n'est pas sensible au feu.

## Revendications

1. Dispositif (1, 21, 31, 41, 51, 61) destiné à être rapporté sur une paroi (2) pour former une cloison traversée par des éléments longilignes (3, 4) en formant, au moins au niveau du passage des éléments longilignes (3, 4), une liaison étanche entre les deux volumes délimités par la cloison comportant un complexe textile (5, 25, 35, 45, 65) destiné à être traversé par lesdits éléments longilignes (3, 4) et comportant au moins une nappe textile (6, 16, 26, 36,46, 56, 66, 76), ladite nappe étant recouverte sur au moins une de ses faces par une couche d'enduction (7, 27, 37, 47) **caractérisé en ce que** ladite couche d'enduction apte à se rétracter pour, d'une part, épouser de façon substantielle la périphérie d'un élément longiligne (3, 4) agencé au travers de la cloison, et d'autre part, réaliser l'étanchéité de la cloison une fois l'élément longiligne (3, 4) retiré.

2. Dispositif selon la revendication 1, ***caractérisé* en ce que** le complexe textile (25, 35) comporte une superposition d'au moins deux nappes textiles (26, 36, 46, 56).

3. Dispositif selon la revendication 2, ***caractérisé* en ce que** le complexe textile (35) comporte au moins deux nappes textiles (46, 56) comportant chacune une couche d'enduction (37, 47) au contact l'une de l'autre.

4. Dispositif selon la revendication 3, ***caractérisé* en ce que** le complexe textile (35) comporte un intermédiaire de collage (32) apte à solidariser entre elles les deux couches d'enduction (37, 47).

5. Dispositif selon la revendication 2, ***caractérisé* en ce que** le complexe textile (25) comporte au moins deux nappes (26, 36) recouvertes par une même couche d'enduction (27).

6. Dispositif selon la revendication 1, ***caractérisé* en ce que** la nappe textile (6) comporte des fils métalliques (8).

7. Dispositif selon la revendication 1, ***caractérisé* en ce que** la nappe textile (66) comporte des fils de verre (68).

8. Dispositif selon la revendication 1, ***caractérisé* en ce que** la couche d'enduction (7, 27, 37, 47) est formée dans un matériau à base de mousse de silicone.

9. Dispositif selon la revendication 1, ***caractérisé* en ce que** le complexe textile (45) comporte une grille (9) solidarisée avec la nappe textile (66) par une bande intermédiaire (10) thermo-soudable.

10. Dispositif selon la revendication 1, ***caractérisé* en ce qu'**il comporte une bande autocollante (11) permettant de solidariser le complexe textile (35) avec ladite paroi (2).

11. Dispositif selon la revendication 1, ***caractérisé* en ce qu'**il comporte une embase (62) ajourée localement et sensiblement rigide sur laquelle le complexe textile (65) est rapporté.

12. Enveloppe (52) formant une enceinte destinée à loger au moins un appareil électrique, ***caractérisée* en ce qu'**une des parois de l'enceinte comprend un dispositif (51) selon l'une des revendications 1 à 11.

## Patentansprüche

1. Vorrichtung (1, 21, 31, 41, 51, 61), die dazu bestimmt ist, an eine Wand (2) angesetzt zu werden, um eine Trennwand mit durchgeführten länglichen Elementen (3, 4) zu bilden, wobei zumindest an der Durchführung der länglichen Elemente (3, 4) eine abgedichtete Verbindung zwischen den beiden durch die Trennwand definierten Rauminhalten gebildet wird, mit einem Textilverbund (5, 25, 35, 45, 65), der dazu bestimmt ist, durch die länglichen Elemente (3, 4) durchquert zu werden, und der mindestens ein Textilvlies (6 ,16, 26, 36, 46, 56, 66, 76) umfasst, wobei das Vlies auf mindestens einer seiner Seiten mit einer Beschichtungsschicht (7, 27, 37, 47) überzogen ist, **dadurch gekennzeichnet, dass** die Beschichtungsschicht geeignet ist, sich zusammenzuziehen, einerseits um sich weitestgehend an den Umfang eines durch die Trennwand durchgeführten länglichen Elements (3, 4) anzupassen und andererseits um die Trennwand abzudichten, wenn das längliche Element (3, 4) herausgezogen ist.

2. Vorrichtung nach Anspruch 1, **dadurch gekennzeichnet, dass** der Textilverbund (25, 35) eine Übereinanderanordnung von mindestens zwei Textilvliesen (26, 36, 46, 56) umfasst.

3. Vorrichtung nach Anspruch 2, **dadurch gekennzeichnet, dass** der Textilverbund (35) mindestens zwei Textilvliese (46, 56) umfasst, die jeweils eine Beschichtungsschicht (37, 47) aufweisen, wobei die Beschichtungsschichten einander berühren.

4. Vorrichtung nach Anspruch 3, **dadurch gekennzeichnet, dass** der Textilverbund (35) ein Klebezwischenprodukt (32) aufweist, das geeignet ist, die zwei Beschichtungsschichten (37, 47) miteinander fest zu verbinden.

5. Vorrichtung nach Anspruch 2, **dadurch gekennzeichnet, dass** der Textilverbund (25) mindestens zwei Vliese (26, 36) umfasst, die mit ein und derselben Beschichtungsschicht (27) überzogen sind.

6. Vorrichtung nach Anspruch 1, **dadurch gekennzeichnet, dass** das Textilvlies (6) Metallfäden (8) umfasst.

7. Vorrichtung nach Anspruch 1, **dadurch gekennzeichnet, dass** das Textilvlies (66) Glasfasern (68) umfasst.

8. Vorrichtung nach Anspruch 1, **dadurch gekennzeichnet, dass** die Beschichtungsschicht (7, 27, 37, 47) aus einem Silikonschaummaterial gebildet ist.

9. Vorrichtung nach Anspruch 1, **dadurch gekennzeichnet, dass** der Textilverbund (45) ein Gitter (9) umfasst, das mittels eines heiß versiegelbaren Zwischenstreifens (10) mit dem Textilvlies (66) fest verbunden ist.

10. Vorrichtung nach Anspruch 1, **dadurch gekennzeichnet, dass** sie einen selbstklebenden Streifen (11) aufweist, durch den der Textilverbund (35) mit der Wand (2) fest verbunden werden kann.

11. Vorrichtung nach Anspruch 1, **dadurch gekennzeichnet, dass** sie eine stellenweise durchbrochene und weitestgehend steife Grundplatte (62) aufweist, an die der Textilverbund (65) angesetzt ist.

12. Umhüllung (52), die einen Behälter bildet, welcher dazu bestimmt ist, mindesteins ein elektrisches Gerät aufzunehmen, **dadurch gekennzeichnet, dass** eine der Wände des Behälters eine Vorrichtung (51) nach einem der Ansprüche 1 bis 11 aufweist.

## Claims

1. Device (1, 21, 31, 41, 51, 61) designed to be installed on a wall (2) to form a partition with longilineal elements (3, 4) passing through it forming, at least where the longilineal elements (3, 4) pass through, a sealed connection between the two volumes delimited by the partition comprising a textile complex (5, 25, 35, 45, 65) designed to have the said longilineal elements (3, 4) pass through it and having at least one textile sheet (6, 16, 26, 36, 46, 56, 66, 76), the said sheet being covered on at least one of its faces by a coating layer (7, 27, 37, 47), ***characterized* in that** said coating layer is capable of retracting so as, on the one hand, to substantially marry up with the periphery of a longilineal element (3, 4) passed through the partition and, on the other, to seal the partition once the longilineal element (3, 4) is withdrawn.

2. Device according to claim 1, ***characterised* in that** the textile complex (25, 35) has a superimposition of at least two textile sheets (26, 36, 46, 56).

3. Device according to claim 2, ***characterised* in that** the textile complex (35) has at least two textile sheets (46, 56) each having a coating layer (37, 47) in contact with each other.

4. Device according to claim 3, ***characterised* in that** the textile complex (35) has an adhesive intermediary (32) capable of connecting the two coating layers (37, 47) together.

5. Device according to claim 2, ***characterised* in that** the textile complex (25) has at least two sheets (26, 36) covered by the same coating layer (27).

6. Device according to claim 1, ***characterised* in that** the textile sheet (6) includes metal wires (8).

7. Device according to claim 1, ***characterised* in that** the textile sheet (66) includes glass filaments (68).

8. Device according to claim 1, ***characterised* in that** the coating layer (7, 27, 37, 47) is formed of a silicone-foam-based material.

9. Device according to claim 1, ***characterised* in that** the textile complex (45) has a grid (9) connected to the textile sheet (66) by an intermediate heat-weldable band (10).

10. Device according to claim 1, ***characterised* in that** it has a self-adhesive band (11) enabling the textile complex (35) to be connected to the said wall (2).

11. Device according to claim 1, ***characterised* in that** it has a locally open-work and substantially rigid base (62) onto which the textile sheet (65) is installed.

12. Envelope (52) forming an enclosure intended to house an electrical apparatus, ***characterised* in that** one of the walls of the enclosure comprises a device (51) according to one of claims 1 to 11.
